Europäisches Patentamt

European Patent Office

Office européen des brevets

(19)

(11) Numéro de publication: **0 018 256**
**B1**

(12)

# FASCICULE DE BREVET EUROPEEN

(45) Date de publication du fascicule du brevet: **10.10.84**

(51) Int. Cl.³: **H 04 B 1/46,** H 04 B 1/64

(21) Numéro de dépôt: **80400433.1**

(22) Date de dépôt: **01.04.80**

(54) **Emetteur-récepteur à commande automatique d'alternat, et réseau de télécommunications comportant un tel émetteur-récepteur.**

(30) Priorité: **13.04.79 FR 7909491**

(43) Date de publication de la demande:
**29.10.80 Bulletin 80/22**

(45) Mention de la délivrance du brevet:
**10.10.84 Bulletin 84/41**

(84) Etats contractants désignés:
**DE GB**

(56) Documents cités:
**CH-A- 461 585**
**DE-A-2 128 889**
**US-A-3 882 458**

**ELECTRON, vol. 29, no. 4, avril 1973,**
**ROTTERDAM (NL), J. HOEK: "De trio**
**zendontvanger, serie 515", pages 160 à 164**

(73) Titulaire: **THOMSON-CSF**
**173, Boulevard Haussmann**
**F-75379 Paris Cedex 08 (FR)**

(72) Inventeur: **Deman, Pierre**
**"THOMSON-CSF"-SCPI 173, bld Haussmann**
**F-75360 Paris Cedex 08 (FR)**
Inventeur: **Pimentel, Albert**
**"THOMSON-CSF"-SCPI 173, bld Haussmann**
**F-75360 Paris Cedex 08 (FR)**
Inventeur: **Ben Sadou, Jean-Claude**
**"THOMSON-CSF"-SCPI 173, bld Haussmann**
**F-75360 Paris Cedex 08 (FR)**
Inventeur: **de Riviere, Charles**
**"THOMSON-CSF"-SCPI 173, bld Haussmann**
**F-75360 Paris Cedex 08 (FR)**

(74) Mandataire: **Turlèque, Clotilde et al**
**THOMSON-CSF SCPI 173, Bld Haussmann**
**F-75379 Paris Cedex 08 (FR)**

Courier Press, Leamington Spa, England.

**Description**

La présente invention concerne les postes émetteurs-récepteurs à commande automatique d'alternat fonctionnant en modulation d'amplitude à bande latérale unique et comportant, dans la partie émission, des moyens de compression de l'amplitude des signaux vocaux de modulation, et dans la partie réception, un dispositif de silence commandé par les signaux vocaux reçus.

De tels émetteurs-récepteurs délivrent, à la sortie du dispositif de démodulation du récepteur, des signaux vocaux d'amplitude sensiblement constante et de ce fait, ne restituent pas les différents niveaux des signaux reçus sur l'entrée de l'émetteur.

Il est connu par le brevet suisse n° 461 585 déposé le 24 août 1977, un émetteur-récepteur de ce type dans lequel les valeurs des taux de compression appliqués aux signaux vocaux à transmettre sont également transmises, et il en est tenu compte lors de la réception. Ces valeurs de taux de compression sont définies à un rythme fixe indépendant du contenu du signal. Leur transmission s'effectue sur une autre voie que les signaux vocaux lorsque ces signaux sont transmis en analogique et peuvent être transmis sur la même voie que les signaux vocaux lorsque ces signaux sont transmis en numérique, par un multiplexage temporel à l'émission des informations concernant les signaux vocaux et les valeurs d'atténuation et un démultiplexage à la réception.

L'invention a pour objet un émetteur-récepteur qui permet également la transmission des valeurs de taux de compression appliqués à des signaux vocaux analogiques, et qui ne nécessite qu'une seule voie de transmission pour des signaux vocaux transmis en analogique. Pour cela, à l'émission, un préambule numérique caractéristique de l'amplitude moyenne du signal vocal pendant une période d'activité vocale est transmis en préambule du signal vocal de cette période d'activité vocale, le signal vocal étant retardé d'une manière convenable pour permettre l'élaboration et l'insertion dans le signal de ce préambule numérique. Le préambule étant transmis pendant un silence, il n'est plus nécessaire de réaliser un multiplexage temporel.

Selon l'invention, un émetteur-récepteur à dispositif de commande automatique d'alternat transmettant des signaux par modulation d'amplitude à bande latérale unique et porteuse supprimée comportant, dans l'émetteur, des moyens de compression de l'amplitude des signaux modulés appliquant le même taux de compression à un paquet de signal, et des moyens de combinaison transmettant à un récepteur la succession des paquets de signaux et les valeurs correspondantes des taux de compression, et comportant, dans le récepteur des moyens de détection des valeurs de taux de compression et de commande de l'amplitude des signaux démodulés pour restituer à chaque paquet de signal l'amplitude reçue à l'entrée de l'émetteur, est caractérisé en ce que, les signaux à transmettre étant des signaux vocaux, chaque paquet de signal est le signal d'une période d'activité vocale, les paquets successifs ayant des durées variables, l'émetteur comportant des moyens de commande comportant un détecteur d'activité vocale reliés à des moyens de codage ayant une sortie délivrant, pour chaque période d'activité vocale, un préambule numérique caractéristique du taux de compression de l'amplitude moyenne du signal de parole de cette période d'activité vocale, les moyens de combinaison comportant une ligne à retard, reliée à l'entrée de modulation, en série avec un premier interrupteur électronique, et un second interrupteur électronique dont l'entrée est reliée à la sortie des moyens de codage, ces deux interrupteurs ayant leurs sorties reliées à l'entrée des moyens de compression, les moyens de commande ayant une première et une seconde sortie reliées à des entrées de commande des interrupteur pour assurer la transmission du préambule numérique des qu'il est obtenu, puis la transmission du signal vocal de la période d'activité vocale correspondante, le retard introduit par la ligne à retard étant égal à l'intervalle de temps T compris entre la détection du début de la période d'activité vocale et la fin de la transmission du préambule numérique correspondant à cette même période.

L'invention sera mieux comprise et d'autres caractéristiques apparaîtront à l'aide de la description ci-après et des dessins s'y rapportant sur lesquels:

— la figure 1 est un schéma d'un mode de réalisation de l'émetteur-récepteur selon l'invention;

— la figure 2 est un schéma détaillé d'un élément de la figure 1;

— la figure 3 représente des chronogrammes de signaux permettant d'expliquer le fonctionnement du dispositif de la figure 2.

Les éléments qui se correspondent identiquement d'une figure à l'autre sont désignés par le même repère.

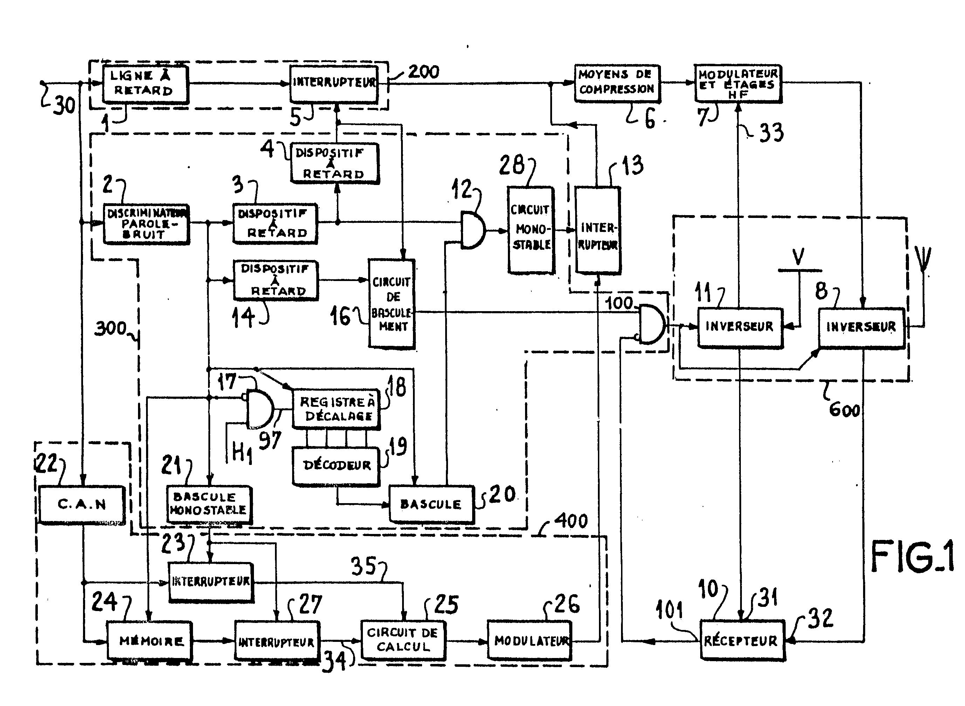

Sur la figure 1, une borne d'entrée 30, destinée à recevoir un signal vocal à transmettre, est reliée, à l'entrée d'un discriminateur parole-bruit 2, à l'entrée d'un convertisseur analogique numérique 22, et à l'entrée d'une ligne à retard 1 dont la sortie est reliée à l'entrée d'un ensemble de circuits 7, comportant essentiellement un modulateur et des étages à haute fréquence, à travers un premier interrupteur électronique 5 et des moyens de compression 6 disposés en série. La sortie de ce discriminateur parole-bruit 2 est reliée en parallèle, à l'entrée d'un premier dispositif à retard 3 dont la sortie alimente un deuxième dispositif à retard 4 et une première entrée d'une porte ET, 12, à l'entrée d'un troisième dispositif à retard 14 dont la sortie alimente l'entrée de "mise à 1" d'un circuit de basculement 16, à l'entrée de commande de lecture d'un registre à décalage 18, à l'entrée d'horloge d'une bascule 20, à une première entrée complémentée d'une porte ET, 17, à l'entrée de commande de mise en mémoire d'une mémoire 24, et enfin à l'entrée d'une bascule monostable 21. La sortie de cette dernière est reliée à l'entrée de commande d'un interrupteur électronique 27, et à celle d'un interrupteur électronique 23. Un signal d'horloge $H_1$, de fréquence 1 KHz, alimente la seconde entrée de la porte ET, 17, dont la sortie est connectée à l'entrée de signal 97 du registre à décalage 18. Ce registre à décalage 18 comporte quatre étages présentant quatre sorties respectivement reliées à quatre entrées d'un décodeur 19 dont la sortie est connectée à la seconde entrée de la porte ET, 12, à travers la bascule 20. La sortie du convertisseur analogique-numérique 22 est reliée à une première entrée 34 d'un circuit de calcul numérique 25 à travers la mémoire 24 et l'interrupteur électronique 27, et à une seconde entrée 35 du circuit de calcul numérique 25 à travers l'interrupteur électronique 23. La sortie de ce circuit de calcul numérique 25 est connectée à l'entrée des moyens de compression 6 à travers un modulateur 26 en série avec un interrupteur électronique 13. Ce dernier est commandé par le signal de sortie d'un circuit monostable 28 dont l'entrée est reliée à la sortie de la porte ET, 12. L'interrupteur électronique 5 est commandé par la sortie du deuxième dispositif à retard 4, qui est reliée à l'entrée de mise à "0" du circuit de basculement 16.

La sortie de ce circuit de basculement 16 est reliée à la première entrée d'une porte ET, dont la deuxième entrée complémentée est reliée à la sortie 101 du récepteur 10.

La sortie de cette porte ET, 100 est reliée à chacune des entrées de commande de deux inverseurs électroniques 8 et 11. L'inverseur électronique 8 permet de connecter une antenne 9 soit à la sortie de l'ensemble de circuits 7, soit à l'entrée de signal 32 d'un récepteur 10. L'inverseur électronique 11 permet de commuter une source V de tensions soit à l'entrée d'alimentation 31 du récepteur 10, soit à l'entrée d'alimentation 33 de l'ensemble de circuits 7. La ligne à retard 1 et le premier interrupteur 5 constituent le dispositif de couplage de l'émetteur 200. Le discriminateur parole-bruit 2, les dispositifs à retard 3, 4 et 14, le circuit de basculement 16, la bascule monostable 21, la porte ET, 100, la porte ET, 12, le circuit monostable 28, la porte ET, 17, le registre à décalage 18, le décodeur 19 et la bascule 20 constituent les moyens de commande 300 de l'émetteur. De même le convertisseur analogique-numérique 22, les interrupteurs 27 et 23, la mémoire 24, le circuit de calcul numérique 25 et le modulateur 26 forment les moyens de codage 400.

Enfin les inverseurs électroniques 11 et 8 constituent le dispositif d'alternat 600.

Le fonctionnement de l'émetteur de cet émetteur-récepteur est le suivant:

Les informations analogiques reçues sur la borne d'entrée 30 sont échantillonnées et converties en signaux binaires par le convertisseur analogique-numérique 22. Dans le cas où ces informations analogiques reçues sont des signaux vocaux, il est effectué à la sortie du convertisseur analogique numérique le calcul de la valeur moyenne de l'amplitude de ces signaux vocaux. Cette valeur moyenne est ensuite codée et utilisée en préambule numérique des signaux vocaux à émettre.

Le discriminateur parole-bruit 2 délivre sur sa sortie un signal logique dont l'état "1" caractérisé une présence d'activité vocale sur la borne d'entrée 30. Dans ce qui suit PAV et $\overline{PAV}$ désigneront respectivement ce signal à l'état "1" et à l'état "0". La durée du signal PAV est égale à celle du message vocal reçu sur la borne 30 et celle du signal $\overline{PAV}$ à son absence, mais ces signaux sont retardés d'une durée $T_1$ par rapport au message ($T_1$ représentant le temps nécessaire à l'élaboration du signal PAV).

Les signaux analogiques reçus sur la borne 30 sont échantillonnés et convertis en signaux binaires par le convertisseur analogique-numérique 22. La mémoire 24 mémorise en permanence les signaux binaires correspondant à un paquet de signal de durée $T_1$. Le contenu de cette mémoire est validé par le signal PAV, fourni par le discriminateur 2, qui déclenche par l'intermédiaire du circuit monostable 21: un état logique "1" de durée $T_2$ à partir d'une transition $\overline{PAV}$—PAV, la fermeture des interrupteurs électroniques 23 et 27 pendant cette durée $T_2$ et le transfert du contenu de la mémoire 24 dans le circuit de calcul numérique 25 ($T_2$: durée nécessaire à l'entrée de données dans le circuit de calcul numérique 25). Pendant la durée $T_2$ le circuit 25 reçoit également les signaux binaires de sortie du convertisseur 22, à travers l'interrupteur électronique 23, et effectue pendant la durée $T_2 + T_3$ le calcul de la valeur moyenne des signaux reçus pendant $T_1 + T_2$ sur ses deux entrées 34 et 35 ($T_3$: durée supplémentaire nécessaire pour le calcul effectué par le circuit de calcul numérique 25). La valeur moyenne obtenue est codée en bi-fréquence (modulation F.S.K. ou Frequency Shift Keying dans la littérature anglo-saxonne). Cette valeur codée est transmise en préambule d'un message vocal.

Pour que l'émetteur puisse émettre un message vocal précédé de son préambule, il est nécessaire de déterminer si le silence qui précède ce message a une durée suffisante pour y placer le préambule; ce préambule nécessite une durée $T_4$ égale à 10 ms dans la présente réalisation. Pour cela la porte ET, 17, ouverte pendant la curée du signal $\overline{PAV}$ (signifiant une absence de message vocal sur la borne d'entrée 30) laisse passer les signaux de l'horloge $H_1$, de fréquence 1 KHz, qui sont transférés dans le registre à décalage 18. Ce registre s'incrémente toutes les millisecondes, pour une durée du signal $\overline{PAV}$ égale à 10 ms le nombre d'impulsions d'horloge enregistrées est égal au nombre binaire 1010. Lorsque le nombre d'impulsions d'horloge enregistrées est égal à 1111, le registre garde cette valeur en mémoire. Lors de la transition $\overline{PAV}$—PAV du signal de sortie du discriminateur 2 la porte ET, 17 se ferme et le contenu du registre est transféré dans le décodeur 19 (sous l'action de la transition $\overline{PAV}$—PAV appliquée à l'entrée de lecture de ce registre). Le décodeur 19 fournit un état "1" logique si le nombre binaire reçu est supérieur ou égal à 1010 et un état "0" dans le cas contraire, cet état logique est mis en mémoire dans la bascule 20 lors de la transition $\overline{PAV}$—PAV du signal de sortie du discriminateur 2 (du fait que cette transition est appliquée sur l'entrée d'horloge de cette bascule 20). Cet état logique est reproduit en sortie de la bascule 20 permettant ainsi d'ouvrir la porte ET, 12, jusqu'à la transition $\overline{PAV}$—PAV suivante du signal de sortie du discriminateur 2.

Le dispositif à retard 3 présente un retard égal à $T_2 + T_3$, délai au bout duquel le signal de sortie du discriminateur 2 est appliqué sur la première entrée de la porte ET, 12, autorisant ainsi le passage à l'état "1" du signal de sortie de cette porte. Cet état "1" permet au circuit monostable 28 de générer à sa sortie un signal à l'état "1" pendant une durée de 10 ms. Ce signal commande la fermeture de l'interrupteur électronique 13 qui permet d'appliquer le préambule à l'entrée des moyens de compression 6.

Le retard de la ligne à retard 4 est égal à $T_4$ de sorte la fermeture de l'interrupteur 5 intervient au bout d'un temps total $T = T_1 + T_2 + T_3 + T_4$ après l'apparition du signal vocal à la borne d'entrée 30. C'est cette durée T qui est affectée à la ligne à retard 1 et au bout de laquelle le signal vocal est transmis au dispositif de compression 6 puis à l'ensemble de circuits émission 7. L'interrupteur 5 est fermé tant que PAV est présent.

Après une durée $T_2 + T_3 - T_5$ correspondant au retard dévolu au dispositif à retard 14 ($T_5$ représentant le temps de commutation et de mise en tension de l'ensemble de circuits 7, et $T_2 + T_3$ le temps de calcul nécessaire au circuit 25), la transition $\overline{PAV}$—PAV du signal à la sortie du discriminateur parole-bruit 2 provoque la mise à l'état "1" d'un premier signal obtenu à la sortie du circuit de basculement 16, la transition inverse PAV—$\overline{PAV}$ provoquant la mise à l'état "0" de ce premier signal avec un retard $T_2 + T_3 + T_4$ dû aux dispositifs à retard 3 et 4. La sortie 101 du récepteur 10 délivre un deuxième signal qui est à l'état "1" lorsque des signaux vocaux sont détectés par le récepteur et à l'état "0" dans le cas contraire. Le premier signal est transmis à la première entrée de la porte ET, 100, dont la deuxième entrée complémentée reçoit le deuxième signal. La sortie de cette porte ET, 100, délivre donc un troisième signal de niveau logique "1" (avec un retard $T_1 + T_2 + T_3 - T_5$) uniquement lorsque des signaux vocaux sont reçus sur la borne 30 de l'émetteur et que le récepteur ne reçoit pas de signal. Ce troisième signal est transmis à l'entrée de commande des inverseurs 11 et 8 qui réalisent une commutation d'alternat automatique en connectant l'antenne 9 et la source V de tensions d'alimentation respectivement sur la sortie sur l'entrée 33 de l'ensemble de circuits 7 lors de l'état "1" de ce signal, et en connectant ces mêmes éléments respectivement sur les entrées 32 et 31 du récepteur 10 lors de l'état "0" de ce signal.

La description détaillée du récepteur 10 est l'objet de la figure suivante.

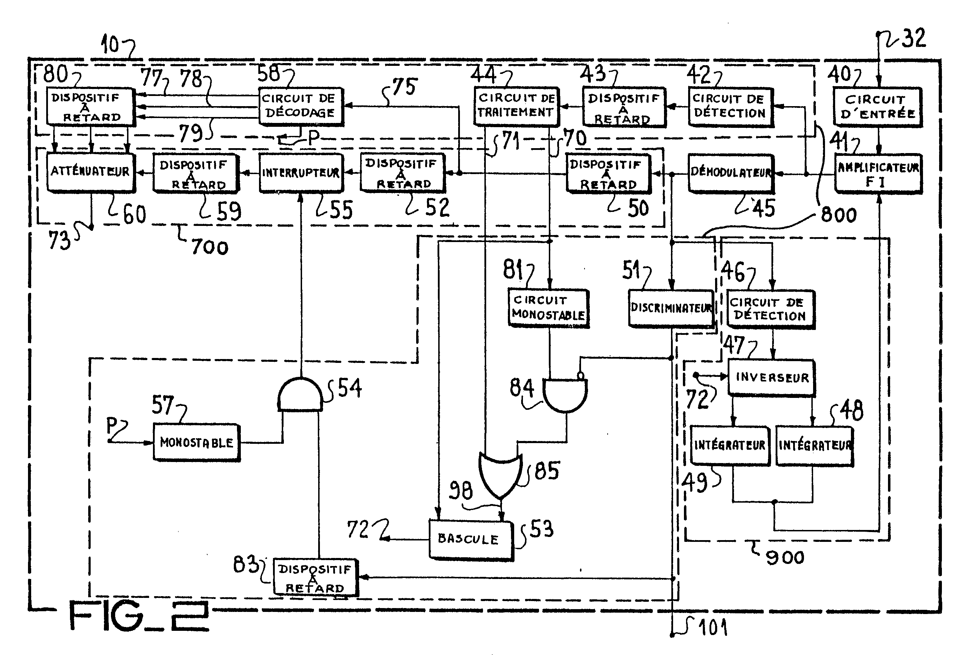

Sur la figure 2 une entrée de signal 32 est reliée à l'entrée d'un démodulateur 45 à travers un circuit d'entrée 40 suivi d'un amplificateur à fréquence intermédiaire 41 comportant une entrée de commande de gain.

La sortie du démodulateur 45 est reliée à la sortie 73 du récepteur 10, successivement à travers un quatrième dispositif à retard 50, un cinquième dispositif à retard 52, un cinquième interrupteur électronique 55, un sixième dispositif à retard 59, et un atténuateur 60, connectés en série. Cette sortie du démodulateur 45 est également reliée à l'entrée d'un circuit de détection 46 dont la sortie est connectée, à travers un inverseur électronique 47 ayant une entrée de commande 72, à l'entrée de l'un ou l'autre des intégrateurs 48 et 49 dont les sorties sont reliées à l'entrée de commande de gain de l'amplificateur 41.

La sortie de l'amplificateur 41 est reliée également à l'entrée d'un circuit de traitement 44 à travers un circuit de détection 42 et un septième dispositif à retard 43. Les sorties 70 et 71 de ce circuit 44 alimentent respectivement une première entrée d'une bascule 53, et une première entrée d'une porte OU, 85, dont la seconde entrée est reliée à la sortie d'une porte ET, 84, et dont la sortie est connectée à la seconde entrée 98 de la bascule 53. La sortie de cette bascule 53 est reliée à l'entrée de commande 72 de l'inverseur électronique 47. La première entrée et la deuxième entrée complémentée de la porte ET, 84, sont respectivement couplées à la première entrée de la bascule 53 à travers un monostable 81, et à la sortie du démodulateur 45 à travers un discriminateur 51. La sortie de ce discriminateur 51 est en outre couplée à la première entrée d'une porte ET, 54, à travers un huitième dispositif à retard 83, et à la sortie 101 du récepteur 10 de la figure 1. La deuxième entrée et la sortie de la porte ET, 54, sont respectivement couplées à une sortie P d'un circuit de décodage 58 à travers un monostable 57, et à l'entrée de commande de l'interrupteur 55.

Le circuit de décodage 58 présente une entrée 75 reliée à la sortie du dispositif à retard 50, et trois sorties 77, 78 et 79 respectivement couplées à trois entrées de commande de l'atténuateur 60 à travers un neuvième dispositif à retard 80.

Le cinquième interrupteur 55, les dispositifs à retard 50, 52 et 59 de l'atténuateur 60 constituent le dispositif de couplage 700 du récepteur.

De même le discriminateur parole-bruit 51, le dispositif à retard 83 et 80, les portes ET, 84 et 54, la porte OU, 85, la bascule 53, les monostables 57 et 81, le circuit de détection 42, le dispositif à retard 43, le circuit de traitement 44, et le circuit de décodage 58 forment les moyens de commande 800 du récepteur. Quant aux moyens de commande 900 du gain de l'amplificateur 41, ils sont constitués du circuit de détection 46, de l'inverseur électronique 47, des intégrateurs 48 et 49.

Le fonctionnement de ce récepteur sera mieux compris à l'aide des diagrammes tension-temps décrits ci-après.

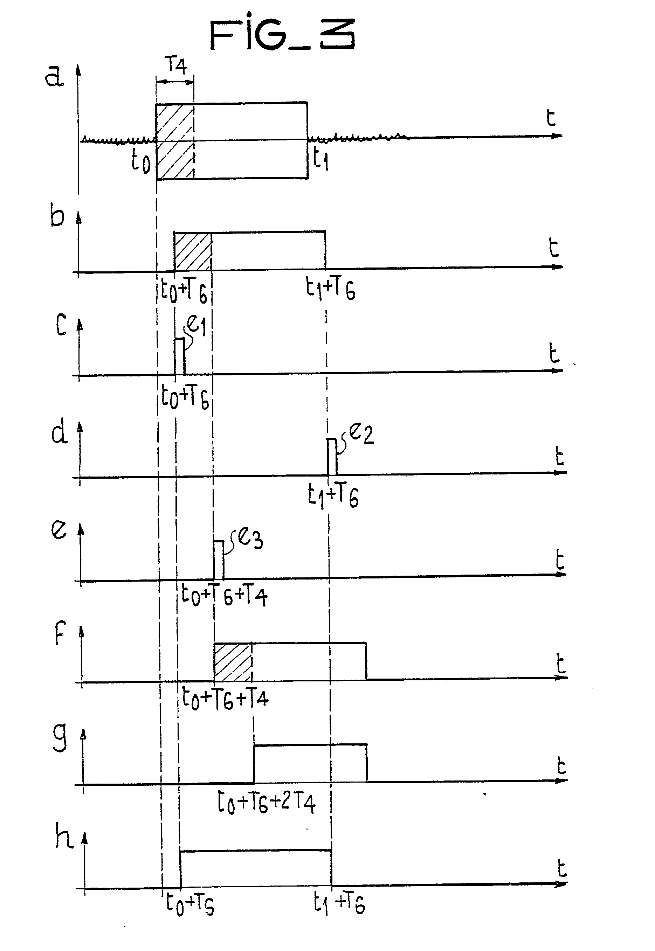

Sur la figure 3 sont représentées, en fonction du temps t, les amplitudes $a$, $b$, $c$, $d$, $e$, $f$, $g$, et $h$ de signaux respectivement présents à la sortie de l'amplificateur à fréquence intermédiaire 41, à la sortie du discriminateur 51, aux sorties 70 et 71 du circuit de traitement 44, à la sortie 76 du circuit de décodage 58, à la sortie du dispositif à retard 83, à la sortie de la porte ET, 54, et à la sortie de la bascule 53.

Les signaux vocaux reçus sur l'entrée 32 sont transmis au démodulateur 45 à travers le circuit d'entrée 40 et l'amplificateur à fréquence intermédiaire 41. Les signaux de sortie de l'amplificateur 41, constitués d'ondes modulées en amplitude et en fréquence respectivement en rapport avec l'amplitude et la fréquence de signaux vocaux transmis, sont représentés par le signal $a$ de la figure 3 comportant un train d'onde pendant un intervalle de temps $t_1 - t_0$ et du bruit en dehors de cet intervalle, la partie hachurée représentant le préambule numérique de durée $T_4$ ($T_4 = 10$ ms). Le circuit 42 détecte les transitions rapides d'amplitude et délivre des impulsions positives ou négatives suivant que les transitions sont de type bruit-signal ou signal-bruit; ces impulsions sont ensuite appliquées, après un retard $T_6$ dû au dispositif à retard 43, à l'entrée du circuit de traitement 44. Ce dernier délivre une impulsion positive $e_1$ sur sa sortie 70, symbolisée par le signal $c$ de la figure 3, lorsqu'il reçoit une impulsion positive correspondant à un début de message reçu par l'antenne 9, et délivre une impulsion positive $e_2$ sur sa sortie 71 (signal $d$ de la figure 3) lorsqu'il reçoit une impulsion négative (correspondant à une fin de message reçu sur l'antenne 9).

L'impulsion positive $e_1$ issue de la sortie 70 est appliquée sur la première entrée de la bascule 53, ce qui permet à cette bascule de générer sur sa sortie le signal logique à l'état "1" $h$, qui y subsiste tant que l'impulsion $e_2$ fournie par la sortie 71 du circuit 44 n'est pas appliquée sur sa deuxième entrée à travers la porte OU, 85.

Le discriminateur 51 (fonctionnant comme le discriminateur 2 de la figure 1) fournit, à partir des signaux délivrés par la sortie du démodulateur 45, le signal $b$ logique synchrone du signal $h$ fourni par la bascule 53, le retard $T_6$ du dispositif 43 étant égal au temps nécessaire à l'élaboration du signal de sortie de ce discriminateur 51. Le signal de sortie de ce dernier permet grâce à la porte ET, 84 de valider l'état "1" du signal logique de sortie de la bascule 53.

En effet, le monostable 81 ayant son entrée de commande reliée à la sortie 70, délivre un niveau logique 0 pendant 10 ms lorsque l'impulsion $e_1$ apparaît, ce qui bloque la porte ET, 84, pendant 10 ms, c'est-à-dire jusqu'à l'instant $t_0 + T_6 + T_4$ ($T_4 = 10$ ms).

Dans le cas où l'impulsion $e_1$ est due à du bruit, cas non représenté, ne correspondant pas à un début de message, le signal obtenu à la sortie du discriminateur 51 est à l'état logique "0". Ce signal est appliqué à la deuxième entrée complémentée de la porte ET, 84, et à l'instant $t_0 + T_6 + T_4$, fait passer le signal de sortie de la porte ET, 84 de l'état "0" à l'état "1"; ce changement d'état appliqué à la deuxième entrée 98 de la bascule 53 à travers la porte OU, 85, provoque la remise à zéro du signal obtenu à la sortie de cette bascule. L'inverseur 47 n'est alors commandé que pendant 10 ms.

Dans le cas de la figure, où l'impulsion $e_1$ correspond à un début de message, la sortie du discriminateur 51 est à l'état logique "1" à l'instant $t_0 + T_6 + T_4$. Ainsi la porte ET, 84 reste bloquée, la bascule 53 n'est pas remise à zéro. L'inverseur 47 est commandé par le signal $h$ obtenu à la sortie de cette bascule, dont la durée de l'état logique "1" est égale à la durée du message vocal reçu sur l'antenne 9.

La sortie P du circuit de décodage 58 délivre le signal d'amplitude $e$ constitué d'une impulsion $e_3$ à l'instant $t_0 + T_6 + T_4$ lorsqu'il a détecte un préambule, ce qui permet au monostable 57 de générer sur sa sortie un signal à l'état logique "0" pendant 10 ms à partie de cet instant. La porte ET, 54, reste donc bloquée entre les instants $t_0 + T_6 + T_4$ et $t_0 + T_6 + 2T_4$, et génère le signal $g$ de la figure 3 à partir du signal $f$ qui représente le signal $b$ retardé de $T_4$ par le dispositif à retard 83. Ce signal $g$, de niveau logique 1 uniquement pendant les signaux vocaux sans le préambule numérique commande la fermeture de l'interrupteur 55. Comme les signaux fournis à l'entrée de cet interrupteur sont également retardés de $T_6 + T_4$ par le dispositif à retard 50 (retard $T_6$) et le dispositif à retard 52 (retard $T_4$), les signaux fournis à l'entrée du dispositif à retard 59 ne sont que des signaux vocaux sans préambule numérique. Le retard apporté par ce dernier est égal au délai nécessaire à l'élaboration des signaux des sorties 77, 78 et 79 du circuit de décodage 58, et au positionnement de l'atténuateur 60 qu'ils commandent avec un retard $T_4$ dû au dispositif à retard 80, afin de restituer sur la borne de sortie 73 les signaux vocaux sans le préambule numérique et avec une amplitude correspondant à celle reçue sur la borne d'entrée 30 de la figure 1.

Les signaux vocaux délivrés par le démodulateur 45 sont par ailleurs détectés par le circuit de détection 46 puis transmis à l'entrée de commande de gain de l'amplificateur 41, à travers l'un des deux intégrateurs 48 ou 49, suivant l'état logique du signal de sortie de la bascule 53 qui commande l'inverseur électronique 47. Lorsque le signal logique de commande de l'inverseur électronique 47 est à l'état "1", conséquence d'un signal vocal présent dans la chaîne de réception, la sortie du circuit de détection 46 est connectée à l'intégrateur 48, de faible constante de temps afin que la tension de commande de gain puisse corriger les fluctuations de niveau du signal reçu dues à des affaiblissements fugitifs liés à la propagation. Lorsque le signal logique de commande est à l'état "0" conséquence d'un absence de signal vocal dans la chaîne de réception, le signal de commande de gain traverse l'intégrateur 49, de forte constante de temps afin que le gain des amplificateurs varie peu pendant les durées de réception de bruit.

L'invention n'est pas limitée au mode de réalisation décrit et représenté, en particulier la sortie de l'interrupteur électronique 13 peut être reliée à la fin des moyens de compression 6, plutôt qu'à l'entrée de ces moyens de compression 6.

Le codage de l'amplitude des niveaux de parole n'est pas limité au codage F.S.K., tout autre codage peut être utilisé, et il est à la portée de l'homme de l'art de réaliser d'une façon différente la structure des moyens de commande.

De tels dispositifs sont notamment utilisables dans les réseaux de transmission.

**Revendications**

1. Emetteur-récepteur à dispositif de commande automatique d'alternat transmettant des signaux par modulation d'amplitude à bande latérale unique et porteuse supprimée comportant, dans l'émetteur, des moyens de compression (6) de l'amplitude des signaux modulés appliquant le même taux de compression à un paquet de signal et des moyens de combinaison transmettant à un récepteur la succession des paquets de signaux et les valeurs correspondantes des taux de compression, et comportant, dans le récepteur des moyens de détection des valeurs de taux de compression et de commande de l'amplitude des signaux démodulés pour restituer à chaque paquet de signal l'amplitude reçue à l'entrée de l'émetteur, caractérisé en ce que, les signaux à transmettre étant des signaux vocaux, chaque paquet de signal est le signal d'une période d'activité vocale, les paquets successifs ayant des durées variables, l'émetteur comportant des moyens de commande (300) comportant un détecteur d'activité vocale (2) reliés à des moyens de codage (400) ayant une sortie délivrant, pour chaque période d'activité vocale, un préambule numérique caractéristique du taux de compression de l'amplitude moyenne du signal de parole de cette période d'activité vocale, les moyens de combinaison comportant une ligne à retard (1), reliée à l'entrée de modulation, en série avec un premier interrupteur électronique (5), et un second interrupteur électronique (13) dont l'entrée est reliée à la sortie des moyens de codage (400), ces deux interrupteurs (5, 13) ayant leurs sorties reliées à l'entrée des moyens de compression, les moyens de commande (300) ayant une première et une seconde sortie reliées à des entrées de commande des interrupteurs (5, 13) pour assurer la transmission du préambule numérique dès qu'il est obtenu, puis la transmission du signal vocal de la période d'activité vocale correspondante, le retard introduit par la ligne à retard (1) étant égal à l'intervalle de temps T compris entre la détection du début de la période d'activité vocale et la fin de la transmission du préambule numérique correspondant à cette même période.

2. Emetteur-récepteur selon la revendication 1, caractérisé en ce que les moyens de codage (400) de l'émetteur comportent un convertisseur analogique-numérique (22) des signaux vocaux, dont la sortie est reliée à l'entrée du deuxième interrupteur (13) par l'intermédiaire d'un dispositif de calcul numérique de la valeur moyenne de l'amplitude des signaux vocaux, en série avec un modulateur (26).

3. Emetteur-récepteur selon la revendication 2, caractérisé en ce que le dispositif de calcul numérique comporte une mémoire (24) ayant une entrée de validation et une sortie couplée par l'intermédiaire d'un troisième interrupteur électronique (27) à une première entrée d'un circuit de calcul numérique (25) dont la deuxième entrée est reliée à l'entrée de la mémoire à travers un quatrième interrupteur électronique (23), et dont la sortie est reliée à l'entrée du modulateur (26), l'entrée de validation de la mémoire (24) d'une part et les entrées de commande des interrupteurs (27 et 23) d'autre part, étant respectivement reliées à une troisième et une quatrième sortie des moyens de commande.

4. Emetteur-récepteur selon la revendication 3, caractérisé en ce que, dans les moyens de commande de l'émetteur (300), la sortie du dispositif de détection d'activité vocale (2) est reliée à l'entrée d'une première bascule monostable (21), l'entrée et la sortie de cette bascule constituant respectivement les troisième et quatrième sorties des moyens de commande (300), cette première bascule générant un signal de commande de fermeture des troisième et quatrième interrupteurs (27, 23) pendant un intervalle de temps $T_2$ à partir de la détection d'une transition bruit-signal à la sortie du dispositif de détection d'activité vocale, $T_2$ représentant la durée nécessaire à l'entrée de données dans le circuit de calcul numérique (25).

5. Emetteur-récepteur selon la revendication 4, caractérisé en ce que les moyens de commande de l'émetteur (300) comportent en outre un premier dispositif à retard (3) de retard $T_2 + T_3$, $T_3$ correspondant au temps de calcul du circuit numérique, dont l'entrée est reliée à la sortie du dispositif de détection d'activité vocale (2), et dont la sortie est reliée à l'entrée d'un deuxième dispositif à retard (4) de retard $T_4$, égal à la durée du préambule numérique, la sortie de ce deuxième dispositif étant reliée à l'entrée de commande du premier interrupteur (5).

6. Emetteur-récepteur selon la revendication 5, caractérisé en ce que les moyens de commande de l'émetteur (300) comportent en outre une deuxième bascule (16) dont l'entrée de commande est reliée à la sortie du dispositif d'activité vocale à travers une troisième dispositif à retard (14) de retard $T_2 + T_3 - T_5$, $T_5$ étant le temps de commutation et de mise en puissance de l'émetteur et dont l'entrée de mise à zéro est reliée à la sortie du deuxième dispositif à retard, la sortie de cette deuxième bascule étant reliée à l'entrée de commande du dispositif d'alternat automatique (600) à travers une première porte (100) bloquée en présence des signaux vocaux modulés reçus par le récepteur.

7. Emetteur-récepteur selon la revendication 6, caractérisé en ce que les moyens de commande (300) comportent en outre une troisième bascule monostable (28) dont l'entrée est reliée à la sortie d'une deuxième porte ET (12) ayant une première entrée reliée à la sortie du dispositif à retard (3) et une deuxième entrée couplée à la sortie du dispositif d'activité vocale (2) à travers un circuit logique (17, 18, 19, 20) générant un signal non nul lorsqu'un silence précédant une période d'activité vocale a une durée supérieure à la durée $T_4$, la sortie de la troisième bascule monostable (28) constituant la seconde sortie des moyens de commande (300) et générant un signal de fermeture du deuxième interrupteur (13) pendant un temps $T_4$ à partir d'une transition d'un niveau logique 0 à un niveau logique 1 de son signal d'entrée.

8. Emetteur-récepteur selon la revendication 1, caractérisé en ce que le récepteur comporte des moyens de commande (800) comportant un circuit de décodage (58) du préambule numérique et un dispositif de couplage (700) comportant un atténuateur variable (60), ayant leurs entrées couplées à la sortie du démodulateur (45), l'atténuateur variable (60) ayant une entrée de commande couplée à une première sortie du circuit de décodage (58) afin de restituer les signaux à chaque période d'activité vocale avec une même amplitude relative que celle des signaux émis à la période d'activité correspondante.

9. Emetteur-récepteur selon la revendication 8, caractérisé en ce que les moyens de commande du récepteur (800) comportent un dispositif de détection d'activité vocale (51), dont l'entrée est reliée à la sortie du démodulateur, et dont la sortie est reliée à la première entrée d'un deuxième circuit logique (84, 85, 53, 83, 54, 57), et en ce qu'une deuxième et une troisième entrée (70, 71) de ce deuxième circuit logique sont reliées respectivement à la première sortie et à la deuxième sortie d'un circuit de traitement (44) fournissant respectivement, avec un retard $\theta_1$, des impulsions de début et de fin du signal d'entrée du récepteur et dont l'entrée est couplée à la sortie de l'amplificateur (41) par l'intermédiaire d'un circuit de détection (42) ($\theta_1$ étant égal à la constante de temps de ce dispositif d'activité vocale réception), et en ce qu'une quatrième entrée (P) du deuxième circuit logique est reliée à une première sortie des moyens de décodage (58) délivrant une impulsion des qu'un préambule a été détecté par le circuit de décodage.

10. Emetteur-récepteur selon la revendication 9, caractérisé en ce que le dispositif de couplage du récepteur (700) comporte un quatrième dispositif à retard (50), de retard $\theta_1$, couplant la sortie du démodulateur (45) à l'entrée d'un cinquième dispositif à retard (52) de retard $\theta_2$, $\theta_2$ étant égal au temps de l'élaboration des signaux de sortie par les moyens de décodage, la sortie de ce cinquième dispositif à retard (52) étant reliée à l'entrée d'un cinquième interrupteur (55) en série avec un sixième dispositif à retard (59) et l'atténuateur (60), et en ce que la sortie du quatrième dispositif à retard (50) est couplée à l'entrée du circuit de décodage (58).

11. Emetteur-récepteur selon la revendication 10, caractérisé en ce que le circuit de commande de gain (900) de l'amplificateur comporte un commutateur (47) ayant une entrée de commande (72), et en ce que le deuxième circuit logique des moyens de commande du récepteur comporte une première sortie, générant un signal de commande pendant la durée des signaux vocaux, reliée à l'entrée de commande du cinquième interrupteur (55) et une deuxième sortie, générant un signal de commande pendant la durée du préambule et des signaux vocaux, reliée à l'entrée de commande du commutateur (47) placé dans le circuit de commande de gain permettant de commuter deux circuits d'intégration (48, 49) ayant des constantes de temps distinctes.

**Patentansprüche**

1. Sender-Empfänger mit Vorrichtung zur alternierenden automatischen Steuerung, der Signale durch Einseitenband-Amplitudenmodulation und unterdrückte Trägerfrequenz überträgt, im Sender bei einem Signalpacket den selben Verdichtungsgrad erzeugende Verdichtungsmittel (6) der Amplitude der modulierten Signale und Verbindungsmittel enthält, welche an einen Empfänger die Signalpaketfolgen und die den Verdichtungsgraden entsprechenden Werte übertragen, und in dem Empfänger Mittel zur Ermittlung der Werte des Verdichtungsgrades und zur Steuerung der Amplitude der demodulierten Signale enthält, um bei jedem Signalpaket die am Eingang des Senders empfangene Amplitude wieder herzustellen, dadurch gekennzeichnet, dass die zu übertragenden Signale Sprachsignale sind, jedes Signalpaket das Signal einer Sprachaktivitätsperiode ist, die aufeinanderfolgenden Pakete unterschiedliche Dauer besitzen, der Sender einen Sprachaktivitätsdetektor (2) umfassende Steuermittel (300) aufweist, welche mit Kodierungsmitteln (400) geschaltet sind, die einen Ausgang besitzen der für jede Sprachaktivitätsperiode einen digitalen, den Verdichtungsgrad der mittleren Amplitude des Sprachsignals dieser Sprachaktivitätsperiode kennzeichnenden Vorspann abgibt, wobei die Verbindungsmittel eine Verzögerungsleitung (1) umfassen, die mit dem in der Reihe mit einem ersten elektronischen Unterbrecher (5) geschalteten Modulationseingang geschaltet ist, und einem zweiten elektronischen Unterbrecher (13) umfassen, dessen Eingang mit dem Ausgang der Kodiermittel (400) geschaltet ist, wobei die Ausgänge dieser beiden Unterbrecher (5, 13) mit dem Eingang der Verdichtungsmittel geschaltet sind, dabei die Steuermittel (300) durch einen ersten und zweiten Ausgang mit den Steuereingängen der Unterbrecher (5, 13) geschaltet sind, um die Übertragung des digitalen Vorspanns nach Erhalt, dann anschliessend die Übertragung des Sprachsignals der entsprechenden Sprachaktivitätsperiode zu gewährleisten, wobei die durch die Verzögerungsleitung (1) eingebrachte Verzögerung gleich dem zwischen der Ermittlung des Beginns der Sprachaktivitätsperiode und dem Ende der Übertragung des dieser selben Periode entsprechenden digitalen Vorspanns enthaltenen Zeitintervall T ist.

2. Sender-Empfänger nach Anspruch 1, dadurch gekennzeichnet, dass die Kodierungsmittel (400) des Senders einen Analog-Digital-Wandler (22) der Sprachsignale umfassen, dessen Ausgang mit dem Eingang des zweiten Unterbrechers (13) über eine in Reihe mit einem Modulator (26) geschaltete Vorrichtung zur digitalen Errechnung des Amplitudenmittelwertes der Sprachsignale geschaltet ist.

3. Sender-Empfänger nach Anspruch 2, dadurch gekennzeichnet, dass die Digitalrechenvorrichtung einen Speicher (24) umfasst, der einen Validierungseingang und einen Ausgang besitzt, der über einen dritten elektronischen Unterbrecher (27) mit einem ersten Eingang eines Digitalrechenkreises (25) gekoppelt ist, dessen zweiter Eingang mit dem Eingang des Speichers über einen vierten elektronischen Unterbrecher (23) geschaltet ist, und dessen Ausgang mit dem Eingang des Modulators (26) geschaltet ist, wobei einerseits der Validierungseingang des Speichers (24) und andererseits die Steuereingänge der Unterbrecher (27 und 23) mit einem dritten beziehungsweise vierten Ausgang der Steuermittel geschaltet sind.

4. Sender-Empfänger nach Anspruch 3, dadurch gekennzeichnet, dass in den Steuermitteln des Senders (300) der Ausgang der Sprachaktivitätsdetektorvorrichtung (2) mit dem Eingang einer ersten monostabilen Kippschaltung (21) geschaltet ist, wobei der Eingang und der Ausgang dieser Kippschaltung den dritten beziehungsweise vierten Eingang der Steuermittel (300) bilden, dabei diese erste Kippschaltung ein Steuersignal zum Schliessen der dritten und vierten Unterbrecher (27, 23) während eines Zeitintervalls $T_2$ ab Entdecken eines Übergangs Laut-Signal am Ausgang der Sprachaktivitätsdetektorvorrichtung erzeugt, wobei $T_2$ die zur Dateneingabe in den Digitalrechenkreis (25) benötigte Zeit ist.

5. Sender-Empfänger nach Anspruch 4, dadurch gekennzeichnet, dass die Steuermittel des Senders (300) zudem eine erste Verzögerungsvorrichtung (3) mit der Verzögerung $T_2 + T_3$ umfassen, wobei $T_3$ der Rechenzeit des Digitalkreises entspricht, deren Eingang mit dem Ausgang der Sprachaktivitätsdetektorvorrichtung (2) geschaltet ist, und deren Ausgang mit dem Eingang einer zweiten Verzögerungsvorrichtung (4) mit der Verzögerung $T_4$ geschaltet ist, die gleich der Dauer des digitalen Vorspanns ist, wobei der Ausgang dieser zweiten Vorrichtung mit dem Steuereingang des ersten Unterbrechers (5) geschaltet ist.

6. Sender-Empfänger nach Anspruch 5, dadurch gekennzeichnet, dass die Steuermittel des Senders (300) zudem eine zweite Kippschaltung (16) umfassen, deren Steuereingang mit dem Ausgang der Sprachaktivitätsvorrichtung über eine dritte Verzögerungsvorrichtung (14) mit der Verzögerung $T_2 + T_3 - T_5$ geschaltet ist, wobei $T_5$ die Zeit der Kommutation und Inleistungssetzung ist, und deren Nullstellungseingang mit dem Ausgang der zweiten Verzögerungsvorrichtung geschaltet ist, wobei der Ausgang dieser zweiten Kippschaltung mit dem Steuereingang der automatischen Wechselvorrichtung (600) über ein erstes Tor (100) geschaltet ist, welches bei Vorhandensein von modulierten, von dem Empfänger empfangenen Sprachsignalen blockiert ist.

7. Sender-Empfänger nach Anspruch 6, dadurch gekennzeichnet, dass die Steuermittel (300) zudem eine dritte monostabile Kippschaltung (28) umfassen, deren Eingang mit dem Ausgang eines zweiten UND-Gatters (12) geschaltet ist, das einen ersten mit dem Ausgang der Verzögerungsvorrichtung (3) geschalteten Eingang besitzt und einen zweiten Eingang, der mit dem Ausgang der Sprachaktivitätsvorrichtung (2) über eine logische Schaltung (17, 18, 19, 20) geschaltet ist, die ein Signal erzeugt, das ungleich Null ist, wenn eine einer Sprachaktivität vorangehende Stille eine grössere Dauer als die Dauer $T_4$ hat, wobei der Ausgang der dritten monostabilen Kippschaltung (28) den zweiten Ausgang der Steuermittel (300) bildet und ein Signal zum Schliessen des zweiten Unterbrechers (13) während einer Zeit $T_4$, ab einem Übergang seines Eingangssignals von einem logischen Niveaus 0 in ein logisches Niveau 1 seines Eingangssignals erzeugt.

8. Sender-Empfänger nach Anspruch 1, dadurch gekennzeichnet, dass der Empfänger Steuermittel (800) umfasst, die einen Dekodierkreis (58) der numerischen Vorspanns und eine Kopplungsvorrichtung (700) umfassen, die einen variablen Attenuator (60) aufweisen, die ihre Eingänge an den Ausgang des Demodulators (45) gekoppelt haben, wobei der variable Attenuator (60) einen an einen ersten Ausgang des Dekodierkreis (58) gekoppelten Steuereingang hat, um die Signale bei jeder Sprachaktivitätsperiode mit derselben relativen Amplitude wie die der in der entsprechenden Aktivitätsperiode gesendeten Signale wiederherzustellen.

9. Sender-Empfänger nach Anspruch 8, dadurch gekennzeichnet, dass die Steuermittel des Empfängers (800) eine Sprachaktivitätsermittlungsvorrichtung (51) umfassen, deren Eingang mit dem Ausgang des Demodulators geschaltet ist, und deren Ausgang mit dem ersten Eingang eines zweiten logischen Kreises (84, 85, 53, 83, 54, 57) geschaltet ist, und dadurch, dass ein zweiter und ein dritter Eingang (70, 71) dieses zweiten logischen Kreises mit einem ersten beziehungsweise zweiten Ausgang eines Bearbeitungskreises (44) geschaltet ist, der mit einer Verzögerung $\theta_1$ Anfangs- beziehungsweise Schlussimpulse des Eingangssignals des Empfängers liefert und dessen Eingang mit dem Ausgang des Verstärkers über einen Ermittlungskreis (42) geschaltet ist (wobei $\theta_1$ gleich der Zeitkonstante dieser Sprachaktivitätsempfangsvorrichtung ist), und dadurch, dass ein vierter Eingang (P) des zweiten logischen Kreises mit einem ersten Ausgang der Dekodiermittel (58) geschaltet ist, die dann einen Impuls abgeben, wenn ein Vorspann von dem Dekodierkreis ermittelt worden ist.

10. Sender-Empfänger nach Anspruch 9, dadurch gekennzeichnet, dass die Schaltvorrichtung des Empfängers eine vierte Verzögerungsvorrichtung mit der Verzögerung $\theta_1$ enthält, die den Ausgang des Demodulators (45) mit dem Eingang einer fünften Verzögerungsvorrichtung (52) mit der Verzögerung $\theta_2$ schaltet, wobei $\theta_2$ gleich der Zeit der Erstellung der Ausgangssignale durch die Dekodiermittel ist, dabei der Ausgang dieser fünften Verzögerungsvorrichtung (52) mit dem Eingang eines fünften Unterbrechers (55) geschaltet ist, der in Reihe mit einer sechsten Verzögerungsvorrichtung (59) und dem Dämpfer (60) geschaltet ist, und dadurch, dass der Ausgang der vierten Verzögerungsvorrichtung (50) mit dem Eingang des Dekodierkreises (58) geschaltet ist.

11. Sender-Empfänger nach Anspruch 10, dadurch gekennzeichnet, dass der Verstärkungssteuerkreis (900) des Verstärkers einen einen Steuereingang besitzenden Kommutator (47) umfasst, und dadurch, dass der zweite logische Kreis der Steuermittel des Empfängers einen ersten Eingang umfasst, der ein Steuersignal während der Dauer der Sprachsignale erzeugt, mit dem Steuereingang des fünften Unterbrechers (55) geschaltet ist, und einen zweiten Eingang umfasst, der einen Steuersignal während der Dauer des Vorspanns und der Sprachsignale erzeugt, mit dem Steuereingang des in dem Verstärkungssteuerkreis angebrachten Kommutators (47) geschaltet ist, der es ermöglicht zwei verschiedene Zeitkonstanten besitzende Integrierschaltungen (48, 49) zu kommutieren.

## Claims

1. Transmitter-receiver of an alternate automatic control device transmitting signals by amplitude modulation with unique lateral and suppressed carrier frequency comprising in the transmitter, compression means (6) of the amplitude of the modulated signals applying the same compression rate to a signal group and combination means transmitting to a receiver of the groups of signals and the corresponding values of the compression rate, and comprising, in the receiver means for the detection of the values of compression rate and the control of the amplitude of demodulated signals in order to restore at each signal group the amplitude received at the input of the transmitter, characterized in that, the signals to be transmitted being vocal signals, each signal group is the signal of a period of vocal activity, the successive groups having variable durations, the transmitter comprising control means (300) comprising a vocal activity detector (2), connected to coding means (400) having an output delivering, for each period of vocal activity, a digital preamble characteristic of the compression rate of the average amplitude of the speech signal of this vocal activity period, the combination means comprising a delay line (1), connected to the modulation input, in series with a first electronic switch (5), and a second electronic switch (13) the input of which is connected to the output of coding means (400), these two switches (5, 13) having their outputs connected to the output of compression means, control means (300) having a first and second output connected to control inputs of switches (5, 13) to ensure the transmission of the digital preamble once it is obtained, and then the transmission of the vocal signal of the corresponding vocal activity period, the delay introduced by the delay line (1) being equal to the time interval T comprised between the detection of the beginning of the vocal activity period and the end of the transmission of the digital preamble corresponding to this same period.

2. Transmitter-receiver according to claim 1, characterized in that the coding means (400) of the transmitter comprise an analogical-digital converter (22) of the vocal signals, the output of which is connected to the input of the second switch (13) through the intermediary of a digital calculating device of the average amplitude value of the vocal signals, in series with a modulator (26).

3. Transmitter-receiver according to claim 2, characterized in that digital calculating device comprises a memory (24) having a verification input and an input coupled through the intermediary of a third electronic switch (27) to a first input of a digital calculating circuit (25) of which the second input is connected to the input of the memory through a fourth electronic switch (23), and the output of which is connected to the input of the modulator (26), the enabling input of the memory (24), on the one hand, and the control inputs of the switches (27 and 23), on the other hand, being respectively connected to a third and a fourth output of control means.

4. Transmitter-receiver according to claim 3, characterized in that, in the control means of the emitter (300), the output of the vocal activity detection device (2) is connected to the input of a first monostable multivibrator (21), the input and the output of this multivibrator constituting respectively the third and fourth outputs of the control means (300), this first multivibrator generating a control signal for closing the third and fourth switches (27, 23) during a time interval $T_2$ from the detection of a noise-signal transition at the output of the vocal activity detection device, $T_2$ representing the duration necessary at the input of data in the digital calculating circuit (25).

5. Transmitter-receiver according to claim 4, characterized in that the control means of the transmitter (300) comprise furthermore a first delay device (3) of delay $T_2 + T_3$, $T_3$ corresponding to the calculating time of the digital circuit, the input of which is connected to the output of the vocal activity detection device (2) and the output of which is connected to the input of a second delay device (4) of delay $T_4$, equal to the duration of the digital preamble, the output of this second device being connected to the control input of the first switch (5).

6. Transmitter-receiver according to claim 5, characterized in that the control of the transmitter (300) comprise, furthermore, a second multivibrator (16) of which the control input is connected to the output of the vocal activity device through a third delay device (14) of delay $T_2 + T_3 - T_5$, $T_5$ being the switching time and applying the transmitter and of which the set to zero input is connected to the output of the second delay device, the output of this second multivibrator being connected to the control input of the automatic alternate device (600) through a first gate (100) blocked in the presence of modulated vocal signals received by the receiver.

7. Transmitter-receiver according to claim 6, characterized in that the control means (300) comprise furthermore a third multivibrator (28) of which the input is connected to the output of a second AND gate (12) having a first input connected to the output of the delay device (3) and a second input coupled to the output of the vocal activity device (2) through a logic circuit (17, 18, 19, 20) generating a non-zero signal when a silence preceding a vocal activity period has a duration longer than the duration $T_4$, the output of the third multivibrator (28) constituting the second output of the control means (300) and generating a signal for closing the second switch (13) during a time $T_4$ from a transition of a logic level 0 at a logic level 1 of its input signal.

8. Transmitter-receiver according to claim 1, characterized in that the receiver comprises control means (800) comprising a decoding circuit (58) of the digital preamble and a coupling device (700) comprising a variable attenuator (60), having their inputs coupled to the output of the demodulator (45), the variable attenuator (60) having a control input coupled to a first output of the decoding circuit (58) in order to restore the signals at each vocal activity period with the same relative amplitude as that of the signals emitted at the corresponding activity period.

9. Transmitter-receiver according to claim 8, characterized in that the control means of the receiver (800) comprise a vocal activity detection device (51), the output of which is connected to the output of the demodulator and the output of which is connected to the first input of a second logic circuit (84, 85, 53, 54, 57) and in that a second and third input (70, 71) of this second logic circuit are connected respectively to the first output and the second output of a processing circuit (44) supplying respectively, with a delay $\theta_1$, impulses of the beginning and the end of the input signal of the receiver and the input of which is coupled to the output of the amplifier (41) through the intermediary of a detection circuit (42) ($\theta_1$ being equal to the time constant of this vocal activity receiving device), and in that a fourth input (P) of the second logic circuit is connected to a first output of decoding means (58) delivering a pulse once a preamble has been detected by the decoding circuit.

10. Transmitter-receiver according to claim 9, characterized in that the coupling device of the receiver (700) comprises a fourth delay device (50), of delay $\theta_1$, coupling the output of the demodulator (45) to the input of a fifth device (52) of delay $\theta_2$, $\theta_2$ being equal to the elaboration time of the output signals by decoding means, the output of the fifth delay device (52) being connected to the input of a fifth switch (55) in series with a sixth delay device (59) and attenuator (60), and in that the output of the fourth delay device (50) is coupled to the input of the decoding circuit (58).

11. Transmitter-receiver according to claim 10, characterized in that the control circuit of the gain (900) of the amplifier comprises a commutating switch (47) having a control input (72), and in that the second logic circuit of control means of the receiver comprises a first output, generating a control signal for the duration of the vocal signals, connected to the control input of the fifth switch (55), and a second output, generating a control signal for the duration of the preamble and vocal signals, connected to the control input of the commutating switch (47) placed in the control circuit of the gain allowing to switch over two integration circuits (48, 49) having distinct time constants.

FIG.1

FIG_2

0 018 256

# FIG_3